Europäisches Patentamt

European Patent Office

Office européen des brevets

(19)

(11) Veröffentlichungsnummer: **0 053 233**
A1

(12) # EUROPÄISCHE PATENTANMELDUNG

(21) Anmeldenummer: **81107709.8**

(22) Anmeldetag: **29.09.81**

(51) Int. Cl.³: **E 04 B 1/60,** F 16 S 1/02,
E 04 C 2/54

(30) Priorität: **03.12.80 DE 3045476**

(43) Veröffentlichungstag der Anmeldung: **09.06.82**
**Patentblatt 82/23**

(84) Benannte Vertragsstaaten: **AT BE CH FR GB IT LI NL**

(71) Anmelder: **artur fischer forschung, Weinhalde 14 - 18,
D-7244 Waldachtal 3 (Tumlingen) (DE)**

(72) Erfinder: **Fischer, Artur, Dr., Weinhalde 34,
D-7244 Waldachtal 3 / Tumlingen (DE)**

(54) **Profilschiene zur stirnseitigen Verbindung von Platten.**

(57) Die Platten (1a, 1b) weisen in ihren zu verbindenden Stirnseiten eine Längsnut (5) auf. Um eine Zugkräfte aufnehmende stirnseitige Verbindung der Platten (1a, 1b) zu ermöglichen, ist die Profilschiene (2a) mit wenigstens zwei in die Längsnuten (5) der Platten (1a, 1b) eingreifenden Verbindungsleisten (4) versehen, die durch paarweise angeordnete Stege (3) gebildet sind, deren Profilierung eine Hinterschneidung (7) bildet. In diese Hinterschneidung (7) sind die in der Längsnut (5) der Platte (1a, 1b) angeordneten, nasenartigen Vorsprünge (8) aufweisenden Sperrzapfen (6) einrastbar.

EP 1434

### Profilschiene zur stirnseitigen Verbindung von Platten

Die Erfindung betrifft eine Profilschiene zur stirnseitigen Verbindung von Platten, die in ihren zu verbindenden Stirnseiten eine Längsnut aufweisen.

Im Strangpreßverfahren hergestellte Profilschienen weisen an allen Stellen einen gleichen Querschnitt auf. Zur stirnseitigen Verbindung von Platten sind Profilschienen bekannt, die Längsnuten aufweisen, in die die Platten einschiebbar sind. Eine Sicherung der Platten in Zugrichtung ist nicht bzw. durch Klemmung nur unzureichend vorhanden.

Der Erfindung liegt die Aufgabe zugrunde, eine Profilschiene zu schaffen, mit der eine Zugkräfte aufnehmende stirnseitige Verbindung von Platten möglich ist.

Erfindungsgemäß wird dies dadurch erreicht, daß die Profilschiene mit wenigstens zwei in die Längsnuten der Platten eingreifenden Verbindungsleisten versehen ist, die durch paarweise angeordnete Stege gebildet sind, deren Profilierung eine Hinterschneidung bildet, in die in der Längsnut der Platte angeordnete, nasenartige Vorsprünge aufweisende Sperrzapfen einrastbar sind.

Zur Herstellung der stirnseitigen Verbindung der Platten müssen diese an ihren zu verbindenden Stirnseiten eine Längsnut aufweisen, die bspw. durch Einfräsen hergestellt sein kann. Ferner werden an beliebigen Stellen und in beliebiger Anzahl in die Längsnut nasenartige Vorsprünge aufweisende Sperrzapfen eingesetzt. Beim Einschieben der Sperrzapfen hin-

- 2 -

EP 1434

tergreifen die nasenartigen Vorsprünge die entsprechend profilierten Stege, so daß sich eine zugsichere Verbindung der Platte mit der Profilschiene ergibt.

In einer weiteren Ausgestaltung der Erfindung können die an der Profilschiene angeordneten Verbindungsleisten in einem Winkel zueinander stehen. Neben der normalen Stoßverbindung zweier Platten können entsprechend der Winkelstellung der in die Längsnuten eingreifenden Verbindungsleisten auch Eckstoßverbindungen hergestellt werden.

In einer weiteren Ergänzung können die Verbindungsleisten auf zwei gelenkig miteinander verbundenen Schenkeln der Profilschiene angeordnet sein. Diese Gestaltung ermöglicht jede beliebige Winkelstellung zwischen den beiden miteinander zu verbindenden Platten. Bei einer Profilschiene aus Kunststoff kann die gelenkige Verbindung der beiden Schenkeln durch eine Spritzhaut gebildet sein.

In einer weiteren Ausgestaltung der Erfindung können die Sperrzapfen an in der Platte fixierten Befestigungselementen angeordnet sein. Die Befestigungselemente können in Bohrungen im Nutgrund der Platte eingepreßt ggf. auch eingeklebt werden.

Bei der Verbindung von aus Ober- und Untergurtplatten sowie Kammern bildenden Stege bestehenden Hohlkammerplatten, deren Kammern in die an der Stirnseite der Platten angeordneten Längsnut münden, kann das Befestigungselement einen in die Kammern eingreifenden Trägerbalken aufweisen, der auf seiner Tragfläche mit einem in einem Durchbruch der Gurtplatte eingreifenden Rastnocken versehen ist. Durch die Anordnung des Rastnockens auf dem Trägerbalken ist es möglich, das Befestigungselement verschiebesicher in der Kammer der Hohlkammer-

EP 1434

platte zu fixieren. Da das Einrasten der Sperrzapfen an jeder Stelle der Profilschiene möglich ist, ist diese Art der Verbindung auch dann möglich, wenn die Kammern der beiden zu verbindenden Hohlkammerplatten nicht miteinander fluchten.

Derartige, bspw. aus Polykarbonat, Polypropylen oder ähnlichen Kunststoffen bestehende Hohlkammerplatten werden in transparenter Ausführung hauptsächlich für den Bau von Gewächshäusern verwendet. Zur Abdichtung der Stirnseite der Hohlkammerplatte gegen eindringendes Regenwasser kann daher in einer weiteren Ergänzung der Erfindung an der Profilschiene eine die äußere Gurtplatte der Hohlkammerplatte überlappende Dichtlippe angeordnet sein.

In der Zeichnung sind Ausführungsbeispiele der Erfindung dargestellt. Es zeigen:

Figur 1    eine Stoßverbindung zweier Platten

Figur 2    eine Eckverbindung zweier Hohlkammerplatten

Figur 3    das in der Kammer einer Hohlkammerplatte eingesetzte Befestigungselement mit Sperrzapfen

Figur 4    eine Profilschiene mit zwei Schenkeln, die über eine Spritzhaut miteinander verbunden sind.

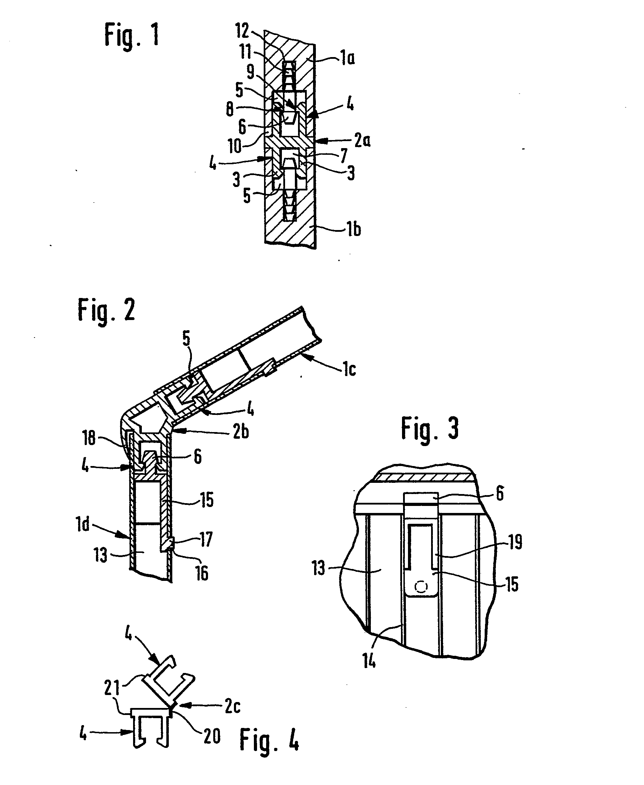

Die Stoßverbindung zweier Platten 1 a, 1 b gemäß Figur 1 erfolgt über eine Profilschiene 2 a, deren durch paarweise angeordnete Stege 3 gebildeten Verbindungsleisten 4 sich gegenüberliegen. Die in ihren zu verbindenden Stirnseiten mit einer Längsnut 5 versehenen Platten 1 a, 1 b werden auf die Verbindungsleisten 4 aufgesteckt. Beim Aufstecken werden die Sperrzapfen 6 in die durch die Profilierung der Stege 3 sich ergebende Hinterschneidung 7 der Verbindungsleisten eingerastet. Dabei hintergreifen die nasenartigen Vorsprünge 8 der Sperrzapfen 6 die einander zugekehrten, die Hinterschneidung bildenden Profilnasen 9 der Stege 3. Die die Längsnut 5 begrenzenden Wandteile 10 geben soweit nach, daß das Einrasten möglich ist. Der Sperrzapfen 6 ist an einem Befestigungselement 11 angeordnet, der in eine entsprechende Bohrung 12 im Nutgrund der Platte eingepreßt ist.

Figur 2 zeigt eine Eckverbindung zweier aus Ober- und Untergurtplatten sowie Kammern 13 bildenden Stege 14 bestehenden Hohlkammerplatten 1 c, 1 d. Die Winkelstellung der beiden Platten ergibt sich durch die entsprechende Winkelstellung der in den Längsnuten 5 der Hohlkammerplatten 1 c, 1 d eingesetzten Verbindungsleisten 4 der Profilschiene 2 b. Das den Sperrzapfen 6 tragende Befestigungselement ist in einer Kammer 13 der Hohlkammerplatte eingesetzt. Zur Fixierung des Befestigungselementes weist dieses einen dem Querschnitt der Kammer angepaßten Trägerbalken 15 auf, der auf seiner Tragfläche mit einem in einem Durchbruch 16 der Gurtplatte eingreifenden Rastnocken 17 versehen ist. Zur Abdichtung der Stirnseite der senkrecht stehenden Hohlkammerplatte 1 c ist an der Profilschiene 2 b eine die äußere Gurtplatte überlappende Dichtlippe 18 angeordnet. Um das Einfedern des Rastnockens 17 in den Durchbruch 16 der Gurtplatte zu erleichtern, sind die Seitenschenkel 19 des Trägerbalkens 15 gegenüber der den Rastnocken 17 tragenden Tragfläche abgesetzt.

Bei der in Figur 4 dargestellten Profilschiene 2 c sind die Verbindungsleisten 4 auf zwei über eine Spritzhaut 20 miteinander gelenkig verbundenen Schenkeln 21 der Profilschiene angeordnet. Damit ist jeder beliebige Winkel für die Eckverbindung zweier Platten herstellbar.

artur fischer forschung

7244 Tumlingen / Waldachtal 3      den 28. November 1980
Ju/Woe

– 1 –

EP 1434

P a t e n t a n s p r ü c h e

1. Profilschiene zur stirnseitigen Verbindung von Platten,
die in ihren zu verbindenden Stirnseiten eine Längsnut
aufweisen, dadurch gekennzeichnet, daß die Profilschiene mit wenigstens zwei in die Längsnuten der Platten
eingreifenden Verbindungsleisten versehen ist, die durch
paarweise angeordnete Stege gebildet sind, deren Profilierung eine Hinterschneidung bildet, in die in der Längsnut der Platte angeordnete, nasenartige Vorsprünge aufweisende Sperrzapfen einrastbar sind.

2. Profilschiene nach Anspruch 1, dadurch gekennzeichnet,
daß die an der Profilschiene angeordneten Verbindungsleisten in einem Winkel zueinander stehen.

3. Profilschiene nach Anspruch 1, dadurch gekennzeichnet,
daß die Verbindungsleisten auf zwei gelenkig miteinander verbundenen Schenkeln der Profilschiene angeordnet
sind.

CO53233

- 2 -

4. Profilschiene nach Anspruch 3, dadurch gekennzeichnet, daß die gelenkige Verbindung der beiden Schenkeln durch eine Spritzhaut gebildet ist.

5. Profilschiene nach Anspruch 1, dadurch gekennzeichnet, daß die Sperrzapfen an in der Platte fixierten Befestigungselementen angeordnet sind.

6. Profilschiene und Befestigungselemente zur stirnseitigen Verbindung von aus Ober- und Untergurtplatten sowie Kammern bildenden Stege bestehenden Hohlkammerplatten, deren Kammern in die an der Stirnseite der Platten angeordnete Längsnut münden, insbesondere nach Anspruch 1, dadurch gekennzeichnet, daß das Befestigungselement einen in die Kammern eingreifenden Trägerbalken aufweist, der auf seiner Tragfläche mit einem in einem Durchbruch der Gurtplatte eingreifenden Rastnocken versehen ist.

7. Profilschiene nach Anspruch 6, dadurch gekennzeichnet, daß an der Profilschiene eine die äußere Gurtplatte der Hohlkammerplatte überlappende Dichtlippe angeordnet ist.

1 / 1

Fig. 1

12
11
9
5
8
6
10
4
3
5

1a
4
2a
7
3
1b

Fig. 2

5
4
1c
2b
18
4
6
1d
15
13
17
16

Fig. 3

6
19
15
13
14

4
21
2c
4
20

Fig. 4

0053233

Europäisches
Patentamt

**EUROPÄISCHER RECHERCHENBERICHT**

Nummer der Anmeldung

EP 81 10 7709.8

| | **EINSCHLÄGIGE DOKUMENTE** | | **KLASSIFIKATION DER ANMELDUNG (Int. Cl.³)** |
|---|---|---|---|
| Kategorie | Kennzeichnung des Dokuments mit Angabe, soweit erforderlich, der maßgeblichen Teile | betrifft Anspruch | |
| A | <u>FR - A1 - 2 369 392</u> (YOSHIDA KOGYO K.K.) <br> * Anspruch 1; Fig. 3 * <br><br> -- | | E 04 B 1/60 <br> F 16 S 1/02 <br> E 04 C 2/54 |
| A | <u>US - A - 3 436 881</u> (R.O. SCHLECHT) <br> * Fig. 2, 3 * <br><br> -- | | |
| A | <u>US - A - 3 397 496</u> (L.M. SOHNS) <br> * Fig. 2 * <br><br> -- | | |
| A | <u>FR - A - 2 150 567</u> (P.L.J. MEUNIER) <br> * Fig. 7 * <br><br> ---- | | **RECHERCHIERTE SACHGEBIETE (Int. Cl.³)** <br><br> E 04 B 1/00 <br> E 04 C 2/00 <br> F 16 S 1/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 17-02-1982 | v. WITTKEN |

EPA form 1503.1 06.78